# DEMANDE DE BREVET EUROPEEN

(11) **EP 0 939 274 A2**
(43) Date de publication de la demande: **01.09.1999**
(21) Numéro de dépôt: 99200451.5
(22) Date de dépôt: 16.02.1999
(51) Int. Cl.: F21V 8/00

(54) **Càble à fibres optiques à diffusion latérale de lumière**

(30) Priorité: 25.02.1998 FR 9802283
(71) Demandeur: Koninklijke Philips Electronics N.V., 5621 BA Eindhoven (NL)
(72) Inventeur: Lambert, Emmanuel, Société Civile S.P.I.D., 75008 Paris (FR)
(74) Mandataire: Caron, Jean

(57) **Abrégé**

Le câble comprend un ou plusieurs torons (10) identiques. Chaque toron peut être fait de trois (fig 1B) ou quatre (fig 1A) fibres élémentaires de, par exemple, un millimètre de diamètre, torsadées. Le rapport entre le pas de torsadage du toron et son diamètre conditionne le résultat obtenu.

Applications : éclairage décoratif

## Description

La présente invention concerne un câble à fibres optiques à diffusion latérale de lumière, comportant au moins un toron fait d'une première couche de fibres élémentaires autour de laquelle peuvent être torsadées d'autres couches de fibres élémentaires.

Un tel câble est utilisé pour l'éclairage décoratif, il permet de dessiner des lignes lumineuses qui peuvent suivre des trajets courbes.

Le document US 5,416,875 (John S. Keplinger & al) décrit un câble qui comprend plusieurs torons, appelés "single cables". Chacun des torons comprend une pluralité de fibres individuelles, par exemple quatre fibres centrales rectilignes qui constituent une âme centrale autour de laquelle d'autres fibres sont torsadées de façon continue. Les torons sont enfin torsadés sur eux-mêmes.

Un objet de l'invention est de simplifier la réalisation du câble tout en améliorant ses caractéristiques.

A cet effet, les fibres élémentaires de la première couche d'un toron sont elles-mêmes torsadées, et cette première couche comporte un nombre de fibres élémentaires tel qu'il n'y a pas de fibre élémentaire centrale dans le toron.

Des torons à deux, trois ou quatre fibres n'ont pas de fibre centrale, ce qui est avantageux car une fibre centrale ne serait pas torsadée et émettrait donc peu de lumière latérale et en outre, si même elle en émettait plus, cette lumière serait absorbée par les fibres qui l'entourent.

Lorsqu'un toron comporte une première couche de fibres recouverte d'une deuxième couche de fibres et que les fibres constituant la première couche sont torsadées avec un rapport donné entre le pas d'hélice et le diamètre de la couche, les fibres constituant la deuxième couche sont torsadées avec un rapport entre le pas d'hélice et le diamètre de la deuxième couche, différent du susdit rapport donné, de telle façon que le rayon de courbure dû au torsa'dage soit sensiblement le même pour toutes les fibres.

D'autres modes particuliers de réalisation de l'invention apparaissent dans les revendications dépendantes 2-6, 8, 9.

Ces aspects de l'invention ainsi que d'autres aspects plus détaillés apparaîtront plus clairement grâce à la description suivante d'un mode de réalisation constituant un exemple non limitatif.

Les figures 1A et 1B représentent en section deux variantes de réalisation d'un câble.

Les figures 2A et 2B représentent, vu en section et latéralement, un toron de trois fibres.

Les figures 3A et 3B représentent, vu en section et latéralement, un toron de quatre fibres.

La figure 4 représente, vu en section, un toron fait d'une première couche de trois fibres et d'une deuxième couche de neuf fibres.

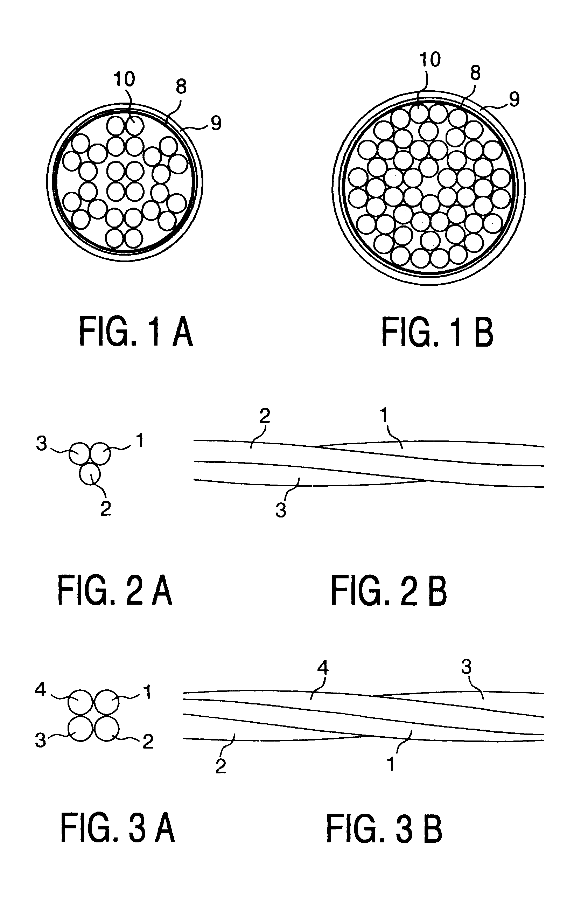

Le câble à fibres optiques à diffusion latérale de lumière représenté par la figure 1A comprend sept torons identiques dont un toron central entouré de six autres, l'un d'eux étant désigné par 10 ; chaque toron est fait de quatre fibres élémentaires torsadées en hélice, ce qui est souligné par le dessin d'un carré joignant les centres des quatre fibres de chaque toron. Le câble de la figure 1B comprend 18 torons, qui sont faits chacun de trois fibres élémentaires torsadées en hélice, ce qui est souligné par le dessin d'un triangle joignant les centres des trois fibres de chaque toron ; il n'y a pas de toron central.

Un toron de deux fibres, non représenté, comprend évidemment deux fibres côte à côte.

Un toron de trois fibres, représenté par la figure 2, est constitué de fibres 1 à 3, qui sont torsadées pour constituer le toron.

Un toron de quatre fibres, représenté par la figure 3, est constitué de fibres 1 à 4, qui sont torsadées pour constituer le toron. Les fibres ont ici chacune un diamètre nominal de un millimètre ; il pourrait aussi, dans d'autres variantes de réalisation, être de 0.75 mm. Les fibres sont en "PMMA" (Poly Methyl MetAcrylate) d'indice 1,492 : par exemple les modèles "PG" du fabricant "TORAY" peuvent être utilisés.

Les torons sont entourés d'une feuille souple transparente 8 en "Mylar", et le tout est à son tour entouré d'une gaine tubulaire transparente 9 en "PVC" (Poly Vinyl Chloride) d'épaisseur comprise entre 0.7 et 1.2 mm. Lorsque chacun de sept torons comprend quatre fibres de 1 mm, le câble obtenu présente un diamètre nominal d'environ 8,6 millimètres.

Dans tous les cas ci-dessus où un toron est fait d'une seule couche de fibres, le rapport entre le pas de l'hélice de torsadage et le diamètre d'un toron est de préférence compris entre 7 et 19, et même entre 10 et 16.

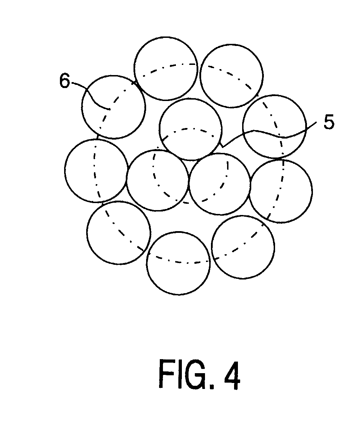

La figure 4 montre un toron plus compliqué dans lequel une première couche de trois fibres, indiquée par un cercle 5, est recouverte d'une deuxième couche de neuf fibres, indiquée par un cercle 6. Si les fibres constituant les deux couches sont torsadées avec sensiblement le même pas de torsadage, les fibres extérieures sont moins contraintes que les fibres internes, et elles émettent moins de lumière ; ceci est dû à un rayon de courbure plus grand qui diminue la flexion appliquée au fibres de la deuxième couche. Pour rendre l'émission de lumière de toutes les fibres la plus égale possible, le rapport entre le pas d'hélice et le diamètre de la couche, utilisé pour torsader la deuxième couche, est différent de celui utilisé pour torsader la première couche. Ainsi le rayon de courbure dû au torsadage est sensiblement le même pour toutes les fibres

Il est possible également de résoudre le problème en employant des types de fibre différents pour des couches différentes. Plusieurs moyens sont possibles pour rendre différents les types de fibre, par exemple en choisissant des diamètres de fibre différents, ou des traitements de surface différents : les types convenables peuvent être déterminés facilement par des essais systématiques. Ceci permet alors de fabriquer un toron en une seule opération, tout en procurant une émission égale pour toutes les couches.

## Revendications

1. Câble à fibres optiques à diffusion latérale de lumière, comportant au moins un toron fait d'une première couche de fibres élémentaires autour de laquelle peuvent être torsadées d'autres couches de fibres élémentaires, caractérisé en ce que les fibres élémentaires de la première couche d'un toron sont elles-mêmes torsadées, et cette première couche comporte un nombre de fibres élémentaires tel qu'il n'y a pas de fibre élémentaire centrale dans le toron.

2. Câble selon la revendication 1, caractérisé en ce que le toron ne comporte que sa première couche.

3. Câble selon la revendication 2, caractérisé en ce que les fibres de la première couche sont torsadées avec un rapport entre le pas d'hélice et le diamètre de la première couche compris entre 7 et 19.

4. Câble selon la revendication 3, caractérisé en ce que les fibres sont torsadées avec un rapport entre le pas d'hélice et le diamètre de la première couche compris entre 10 et 16.

5. Câble selon la revendication 2, caractérisé en ce que le câble comprend sept torons identiques dont un central entouré de six autres.

6. Câble selon la revendication 5 caractérisé en ce que chacun des sept torons comprend lui-même quatre fibres.

7. Câble selon la revendication 1, dans lequel un toron comporte une première couche de fibres recouverte d'une deuxième couche de fibres, caractérisé en ce que, les fibres constituant la première couche étant torsadées avec un rapport donné entre le pas d'hélice et le diamètre de la couche, les fibres constituant la deuxième couche sont torsadées avec un rapport entre le pas d'hélice et le diamètre de la deuxième couche, différent du susdit rapport donné, de telle façon que le rayon de courbure dû au torsadage soit sensiblement le même pour toutes les fibres.

8. Câble selon la revendication 1, dans lequel un toron comporte une première couche de fibres recouverte d'une deuxième couche de fibres, caractérisé en ce que les fibres constituant la deuxième couche sont d'un type différent de celui des fibres de la première couche fibres.

9. Câble selon la revendication 1, caractérisé en ce qu'il est entouré d'une feuille souple transparente, le tout à son tour entouré d'une gaine tubulaire transparente.
